# EUROPEAN PATENT APPLICATION

(11) **EP 1 672 535 A1**
(43) Date of publication of application: **21.06.2006**
(21) Application number: 05026890.3
(22) Date of filing: 08.12.2005
(51) Int. Cl.: G06F 17/30

(54) **Distributed intelligent diagnostic scheme**

(30) Priority: 15.12.2004 US 12818
(71) Applicant: Rockwell Automation Technologies, Inc., Mayfield Heights, OH 44124 (US)
(72) Inventor: Staron, Raymond J., Richmond Heights, OH 44143 (US); Discenzo, Frederick M., Brecksville, OH 44141 (US); Hall, Kenwood H., Hudson, OH 44236 (US); Maturana, Francisco P., Mayfield Heights, OH 44124 (US)
(74) Representative: Jung HML

(57) **Abstract**

A system and methodology that employs an agent technology logic layer operating in connection with or integral to a controller is provided. The logic layer can be a functional extension of the controller's firmware that facilitates logical reasoning and decision-making with regard a network as a function of individual agent(s) state and/or status. The components of the subject invention can facilitate combining high level reasoning and/or decision making capabilities with conventional control programs to effect agent-based system diagnosis and/or system reconfiguration.

## Description

### TECHNICAL FIELD

The subject invention relates generally to an industrial process, and more particularly to a control system that employs a distributed intelligent agent infrastructure to effect diagnostics activity.

### BACKGROUND OF THE INVENTION

Industrial controllers are special-purpose computers utilized for controlling industrial processes, manufacturing equipment, and other factory automation, such as data collection or networked systems. In accordance with a control program, the industrial controller, having an associated processor (or processors), measures one or more process variables and/or inputs reflecting the status of a controlled system and changes outputs effecting control of such system.

Industrial control systems have enabled modern factories to become partially or completely automated in many circumstances. These systems generally include a plurality of input/output (I/O) modules that interface at a device level to switches, contactors, relays and solenoids along with analog control to provide more complex functions such as Proportional, Integral and Derivative (PID) control or multi-input multi-output (MIMO) or model-reference adaptive control (MRAC). Communications have also been integrated within the systems, whereby many industrial controllers can communicate *via* network technologies such as Ethernet, Control Net, Device Net or other network protocols. Generally, industrial controllers utilize the aforementioned technologies along with other technologies to control, cooperate and communicate across multiple and diverse applications.

In addition, conventional control systems employ a large array of varied technologies and/or devices to achieve automation of an industrial or commercial environment, such as a factory floor or a fabrication shop. Systems employed in an automated environment can utilize a plurality of sensors and feedback loops to direct a product through, for example, an automated assembly line.

Distributed industrial systems have emerged to assist in intelligent monitoring (*e.g., via* sensors) of an industrial system. An example of such a system is an agent-based manufacturing control system. These agent-based systems and/or networks are evolving into robust control systems for large series production control systems. In general, an agent-based control system employs a community of autonomous, intelligent computational units referred to as "agents." Respective agents can typically be responsible for local decision-making and control of one or more explicit portions of a manufacturing process. A key element in such a system is cooperation among the agents in order to provide a desirable global behavior of controlled systems and/or processes.

With ever shorter product life-cycles, decreasing product launch times, and increasing product variety, conventional manufacturing processes need to provide more product flexibility and higher volume scalability while maintaining high product quality and low manufacturing costs. Agent technology is well suited to addressing the control aspects of these manufacturing requirements. As autonomous decision-makers, agents are able to dynamically react to unforeseen events, exploit different capabilities of components, and/or adapt flexibly to changes in their individual environment.

Although agent-based systems have been employed to segment a large production system into manageable autonomous units, there is a need expand the autonomous decision-making functionality to provide improved techniques to diagnose and/or evaluate a system as a whole based upon the input from individual autonomous agents.

### SUMMARY OF THE INVENTION

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to the more detailed description that is presented later.

The subject invention disclosed and claimed herein, in one aspect thereof, comprises a system and/or methodology that can employ an agent technology logic layer operating in connection with or integral to a controller. The logic layer can be a functional extension of the controller's firmware that facilitates logic reasoning and decision making with regard to individual agent state and/or status. In other words, the components of the subject invention can facilitate combining high-level logic, reasoning and/or decision-making capabilities with conventional control programs. In particular, diagnostic and evaluation functionalities are particular exemplary applications of this novel technology.

As discussed *supra,* systems today employ a limited sophistication with regard to control in a distributed manner. More particularly, conventional systems do not address reconfiguration of the system as a whole based upon a state diagnosis or prognosis of individual agents. In an aspect, a system that facilitates analyzing and/or diagnosing an agent-based network is provided. The system can include an interface component that receives information from a plurality of agents and a logic engine component that employs logic that analyzes the agent-based network in accordance with the information. The interface and/or logic engine component(s) can be centralized or specific to individual autonomous units (e.g., agents). In one aspect, the state of individual agents can be obtained *via* a centralized interface and analyzed *via* a centralized logic engine. In another aspect, communication directly between agents can be employed to effect system diagnosis and/or network status (e.g., configuration).

The system can further include a controller component that configures or reconfigures the agent-based network in accordance with an output from the logic engine. It will be appreciated that the controller component can include a firmware component having logic that effects configuring the agent-based network in accordance with the output from the logic engine component. Further, a sensing component that facilitates obtaining the information from the plurality of agents can be provided. The sensing component can be integral to the interface component.

### BRIEF DESCRIPTION OF THE DRAWINGS

FIG. 1 illustrates a general component block diagram of a system that employs a diagnostic component in accordance with an aspect of the subject invention.

FIG. 2 illustrates a general block diagram of a system having exemplary interface and logic engine components integral to the autonomous agent components in accordance with an aspect of the subject invention.

FIG. 3 illustrates a general block diagram of a system that employs a sensing component integral to an interface component in accordance with an aspect of the subject invention.

FIG. 4 illustrates a general block diagram of a system that illustrates a multi-network diagnostic system in accordance with an aspect of the subject invention.

FIG. 5 illustrates a logic engine component including rule-based mechanisms in accordance with an aspect of the invention.

FIG. 6 illustrates a logic engine component including artificial intelligence-based mechanisms in accordance with an aspect of the invention.

FIG. 7 illustrates an interface component including rule-based mechanisms in accordance with an aspect of the invention.

FIG. 8 illustrates an interface component including artificial intelligence-based mechanisms in accordance with an aspect of the invention.

FIG. 9 illustrates an exemplary flow chart of procedures to diagnose and reconfigure an agent-based network in accordance with a disclosed aspect.

FIG. 10 illustrates a component diagram of an exemplary computing environment in accordance with an aspect of the subject invention.

FIG. 11 illustrates a component diagram of another exemplary computing environment in accordance with an aspect of the subject invention.

FIG. 12 illustrates a block diagram of a computer operable to execute the disclosed architecture.

FIG. 13 illustrates a schematic block diagram of an exemplary computing environment in accordance with the subject invention.

### DETAILED DESCRIPTION OF THE INVENTION

The subject invention is now described with reference to the drawings, wherein like reference numerals are used to refer to like elements throughout. In the following description, for purposes of explanation, numerous specific details are set forth in order to provide a thorough understanding of the subject invention. It may be evident, however, that the subject invention can be practiced without these specific details. In other instances, well-known structures and devices are shown in block diagram form in order to facilitate describing the subject invention.

As utilized in this application, terms "component," "agent," "module," "system," "controller," "device," and variants thereof are intended to refer to a computer-related entities, either hardware, a combination of hardware and software, software, or software in execution. For example, a component can be, but is not limited to being, a process running on a processor, a processor, an object, an executable, a thread of execution, a program, and/or a computer. By way of illustration, both an application running on a server and the server can be a component. One or more components can reside within a process and/or thread of execution, and a component can be localized on one computer and/or distributed between two or more computers.

As used herein, the term to "infer" or "inference" refer generally to the process of reasoning about or inferring states of the system, environment, and/or user from a set of observations as captured *via* events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

The subject invention is directed to a system and/or methodology that can employ an agent technology layer that operates in connection with or integral to a controller and can be an extension of the controller's firmware to facilitate logic reasoning and decision making. As will be described in greater detail *infra,* additional components facilitate combining high-level reasoning and/or decision making capabilities with conventional control programs. Diagnostics and prognostics are particular applications of this novel technology. Diagnostics and prognostics are a particular application of this novel technology. Although the described aspects are directed to a diagnostics component and/or application, it is to be appreciated that the features and/or functionality of the invention described herein can further be employed in a prognostics-driven application and/or reconfiguration system.

As previously discussed, systems today employ a limited sophistication with regard to control in a distributed manner. For instance, conventional systems do not address reconfiguration of the system based upon a state and/or status diagnosis of individual autonomous agents. For example, in an electrical distribution system a physical connection is required between a producer and consumer. In accordance to this exemplary system, the subject invention can effect obtaining loading and/or demand information from individual autonomous units (*e.g*., agents) throughout the system. Accordingly, the invention can facilitate applying logic to the information to perform any predictive and/or desired action (*e.g*., reroute power in the case of a failure).

It is to be understood that the diagnostic and/or prognostic-driven functionality of the subject invention can be applied to and employ therewith a model-based environment. In other words, the subject invention can employ a framework that includes model-based components and/or functionality to facilitate diagnosis, prognosis, planning and/or control. This functionality can either be included within or isolated from the components described *infra.*

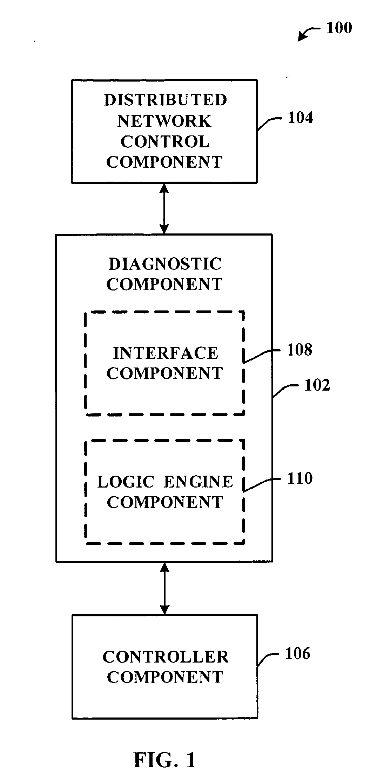

Referring initially to FIG. 1, a distributed intelligent diagnostic system 100 in accordance with an aspect of the subject invention is shown. Generally, system 100 can include a diagnostic component 102 that can provide intelligent reasoning between autonomous units (*e.g*., agents) included within a distributed network control component 104 and a controller component 106. More particularly, in one aspect, the diagnostic component 102 can obtain information from the distributed network control component 104, apply intelligent reasoning and convey such diagnosis (*e.g*., analysis) to the controller component 106 (*e.g*., base controller firmware) whereby subsequent desired actions (*e.g*., reconfiguration, analysis) can be performed. Moreover, environmental effects (*e.g.*, expected or possible), missions, loading and/or duty cycles can be considered in connection with alternate aspects of the diagnostic component 102 and system described herein.

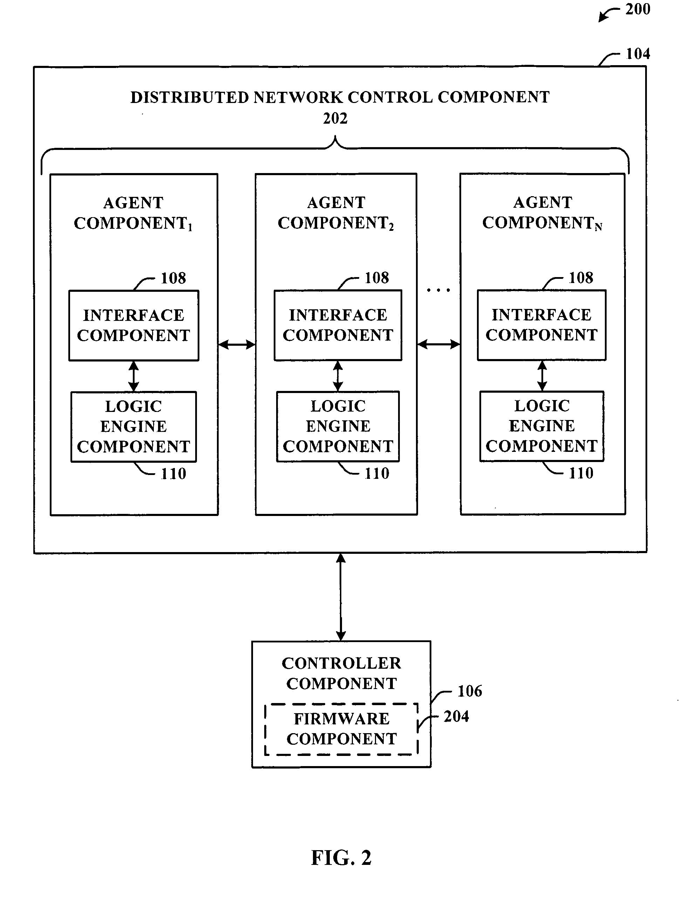

Although FIG. 1 illustrates a centralized diagnostic component 102, it is to be appreciated that multiple diagnostic components 102, and functionality thereof, can be included within the autonomous units of the distributed network control component 104. Thus, intelligent reasoning and diagnosis can be accomplished directly *via* interaction between autonomous units. This agent-to-agent communication is discussed in greater detail *infra* with respect to FIG. 2.

The distributed network control component 104 can control and/or monitor information with regard to the operation of individual network components (*e.g*., agents) which together form the distributed network. These agent components will be discussed in further detail *infra.* For example, the distributed network control component 104 can monitor the operation of individual manufacturing machines (*e.g*., lathes, extruders, drills, mixers) in an industrial process. Although specific aspects are described herein, it is to be understood that the subject invention can be employed in connection with any device capable of being controlled and/or monitored by a distributed control system. Alternate examples can include, but are not to be limited to, actuatable machines, sensors, communication devices and other input/output devices.

The centralized diagnostic component 102 of FIG. 1 can communicate with the distributed network control component 104 and the controller component 106 in any manner which is known, or becomes known, without departing from the spirit and/or scope of the invention and claims appended hereto. For example, the communication protocol between the diagnostic component 102 and the other components (104, 106) can employ any wired or wireless techniques. For instance, in one wired aspect, an Ethernet architecture can be employed. Moreover, in wireless aspects, an IEEE 802.11, Bluetooth™, Infra Red, Internet, or the like can be employed.

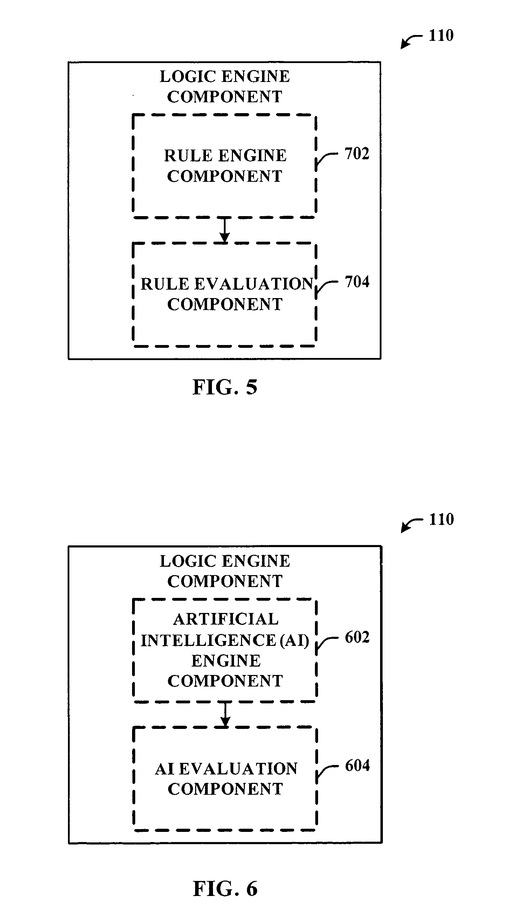

The diagnostic component 102 can include an interface component 108 and a logic engine component 110. The interface component 108 that can effect communication between the distributed network control component 104 and the controller component 106. The logic engine component 110 can apply logical reasoning methods and algorithms to information obtained from either the distributed network control component 104 and/or the controller component 106. It is to be appreciated that alternate aspects of the subject invention can employ artificial intelligence and rule based techniques in order to automatically effect the monitoring, reasoning and diagnostics activities with regard to a distributed network. These alternate aspects will be discussed in further detail with respect to FIGS. 5-8 *infra*.

Referring now to FIG. 2, an alternate aspect of the subject invention is shown. More particularly, FIG. 2 illustrates a system 200 that facilitates monitoring and/or diagnosing a distributed network control component 104 *via* agent-to-agent communication. As shown, distributed network control component 104 can include 1 to M agent components, where M is an integer. Agent components 1 to M can be referred to individually or collectively as agent components 202. As illustrated in FIG. 2 and described *supra,* an interface component 108 and logic engine component 110 can be deployed within the individual agent components 202. Thus, the agent components 202 can establish system diagnostics and perform desired logic and/or reasoning in a distributed manner by collaborating with each other in order to create diagnostic intelligence in a naturally emerging manner.

It will be understood that, with respect to the deployment of intelligent agent components 202, the invention can employ any desired communication protocol and agent discovery system. For example, Contract Net, Auction, Market-based Model and Global Resource Locators (*e.g*., directory facilitators) or the like can be used. By way of further example, operating in accordance with such protocols, the agents can modify their communication and negotiation behavior in ways that can result in a reduction in the number of signals that are sent among agents and thereafter processed. This, in turn, can reduce the amount of communication that occurs among the agents 202 and can increase the speed of collaborative decision-making among the agents 202.

In one aspect, messages between disparate agents 202 can be scripts communicated in the job description language (JDL), and wrapped in additional formatting information in accordance with a specialized, universally-accepted communication language, for example, the Foundation for Intelligent Physical Agents (FIPA) Agent Communication Language (ACL) or the Open Systems Architecture for Condition Based Maintenance (OSA-CBM). In alternate aspects, other interaction protocols and communication languages can be employed without departing from the spirit and/or scope of the invention and claim appended hereto.

Moreover, the communication within the agent infrastructure can be bound by a defined criteria (*e.g*., meta-level). This convergence criteria can be employed to assist in avoiding infinite cycling between agent components 202. In one aspect, the meta-level criteria can be user defined from a primary rules perspective. It will be appreciated that, through collaboration and/or learning, the agent components 202 can combine the knowledge and evolve the state of the rules to create boundaries whereby the system operates within reasonable ranges.

Additionally, the controller component 106 can include a firmware component 204. Firmware component 204 can be conventional such that it includes programming that can be found in controllers employed in non-agent-based distributed control systems, particularly conventional non-agent-based industrial controllers. Finnware component 204 can facilitate processing interactions between the controller component 106 and devices (not shown) external to the controller component 106. For example, the firmware component 204 can facilitate formatting signals produced by the agent(s) 202 for communication onto a network such that the signals can be sent to other controllers (not shown) in accordance with desired diagnostic schemes and results. In other words, the firmware can facilitate formatting signals to configure them in accordance with a protocol of the network (e.g., in accordance with the requirements of an Ethernet, ControlNet or DeviceNet-type network and/or, in some embodiments, the TCP/IP or UDP/IP protocol, or the IEEE802.11b (wireless) protocol). Likewise, the firmware component 204 is able to receive and process signals from the diagnostic component (*e.g*., interface component and logic engine, 108, 110). The firmware component 204 can also facilitate the creation and use of (and otherwise support the operation of) application-specific control software, which can govern the manner in which the agent(s) 202 controls and/or monitors the machine(s) (not shown) assigned to the agent(s) 202.

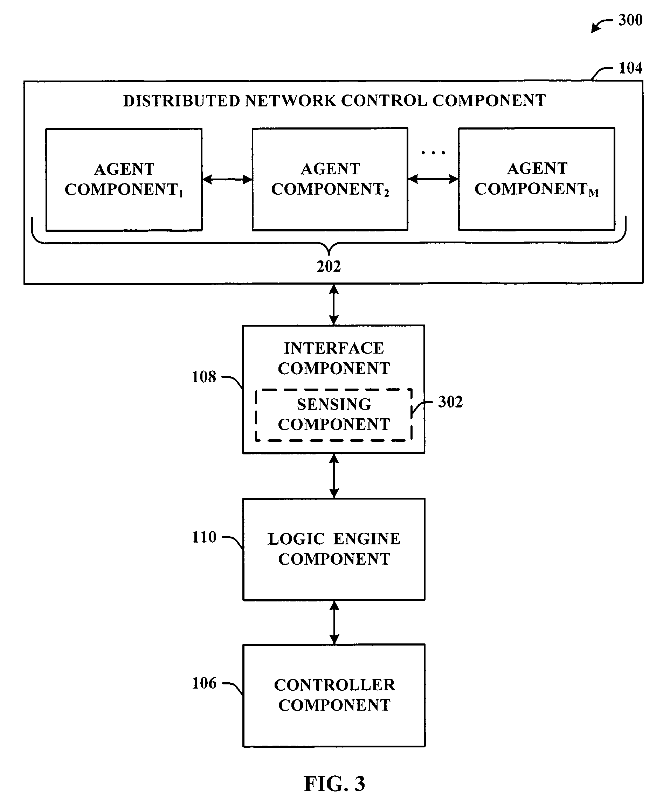

Referring now to FIG. 3, a system 300 that facilitates monitoring and/or diagnosing an agent-based network 104 is shown. As illustrated, the system can employ an interface component 108 having a sensing component 302 therein. Although the illustrated aspect employs the sensing component 302 integral to the interface component 108, it is to be understood that the sensing component 302 can be employed in any location. For example, sensing component 302 can be employed within the agent component 202 itself thus transferring information to the interface component 108. Once obtained, the information can be compiled and processed *via* the logic engine component 110. Moreover, the system can be configured to record the information obtained from the agent(s). Similarly, the sensing component may be integral to the controller such as a programmable logic controller (PLC) or a variable frequency drive (VFD) that provides sensor data and computed sensor or state data to the interfacing component.

As described with reference to FIG. 2, it is to be understood that alternate aspects can be employed whereby each agent component 202 includes an interface, logic engine and/or sensing component. Accordingly, the agent component(s) 202 in this alternate aspect can diagnose and/or reconfigure the distributed network control component 104 *via* agent-to-agent communication. For example, the system can identify and/or address problems to effect healthy configurations for a network under stress or to better optimize the use of resources.

In an alternate aspect, the logic engine component 110 can be employed in a simulation manner such that the system 300 can simulate the effects of particular situational criteria. It is to be appreciated that the systems and/or methodologies discussed herein are not intended to limit the novel diagnostic and monitoring functionality of the subject invention. In other words, it is to be understood that the novel aspects and functionality of the invention can be employed in connection with any application (*e.g*., manufacturing, commercial, building or facility structure, vehicle, municipal system, health and industrial environments) capable of being monitored and/or diagnosed *via* an intelligent system. Other sensing applications include, but are not intended to limit, water distribution systems (land or ship based), power systems, pollution control systems, bio-hazard systems, recycling systems or the like. Essentially, the novel systems described herein can be employed in connection with any industry to perform functions such as to predict maintenance of a system, monitor performance of a system, diagnose agent/system problems encountered during operation, and/or effect system reconfiguration.

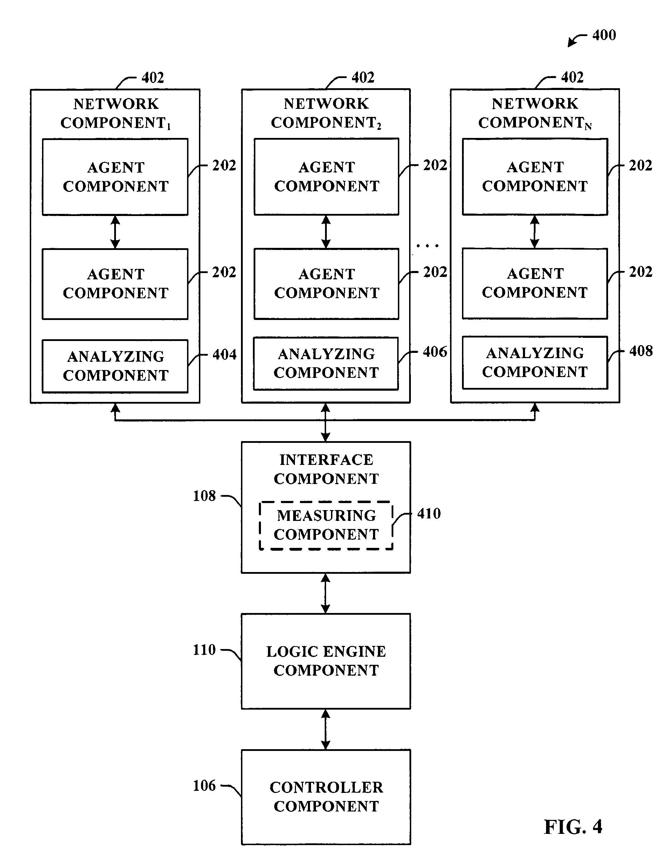

Yet another exemplary aspect of the invention is illustrated in FIG. 4. More particularly, FIG. 4 illustrates 1 to N distributed networks, where N is an integer. It is to be understood that 1 to N distributed networks shown in FIG. 4 can be referred to individually or collectively to as distributed networks 402. Each network component 402 can include one or more agent components 202. For example, as shown, each network component 402 can include agent component(s) 202 and a network specific analyzer component (*e.g*., 404, 406, 408). The analyzer component(s) 404, 406, 408 can poll network specific agents 202, analyze information received (*e.g*., performance, state, status, maintenance data) and communicate the information to the logic engine component 110 *via* the interface component 108 (and measuring component 410). It is to be understood from the aspect illustrated in FIG. 4 that the novel monitoring and/or diagnostic functionality of the subject invention can be employed with respect to any system architecture without departing from the spirit and scope of the novel features and functionality. As previously stated, although the aspect shown in FIG. 4 employs a centralized measuring component 402, it is to be appreciated that that individual measuring (*e.g.*, sensing) components (not shown) can be employed with respect to individual agents and/or networks.

With reference now to FIG. 5, an alternate aspect of a logic engine component 110 is shown. More particularly, logic engine component 110 can include a rule engine component 502 and a rule evaluation component 504. In accordance with this alternate aspect, an implementation scheme (*e.g.*, rule) can be applied to define and/or implement a desired diagnostic (*e.g.*, reasoning and/or evaluation) scheme. It will be appreciated that the rule-based implementation can automatically and/or dynamically define and implement a diagnostic scheme with respect to a distributed network(s) and corresponding agent(s). In accordance thereto, the rule-based implementation can evaluate the agent(s) by employing a predefined and/or programmed rule(s) based upon any desired criteria (*e.g*., maintenance protocol, production standards, regulatory limits).

By way of example, a user can establish a rule that can implement an evaluation based upon a preferred occurrence recovery scheme. In this exemplary aspect, the rule can be constructed to evaluate an agent within a distributed network based upon desired criteria whereby if a problem is detected, the system can employ the rule-based evaluation scheme to address and/or rectify the problem. It is to be appreciated that any of the decision points present within the system can employ a rule-based implementation scheme(s).

A schematic diagram of another alternative aspect of the logic engine component 110 is illustrated in FIG. 6. In addition to or in place of the rule-based components described with reference to FIG. 5, the logic engine component 110 can include an artificial intelligence (AI) engine component 602 and an AI evaluation component 604.

In accordance with this aspect, the optional AI engine and evaluation components 602, 604 can facilitate evaluation and decision-making in connection with various functional aspects of the logic engine component 110. The AI components 602, 604 can optionally include an inference component (not shown) that can further enhance automated aspects of the AI components 602, 604 utilizing, in part, inference based schemes to facilitate inferring intended actions. The AI-based aspects of the invention can be effected *via* any suitable machine-learning based technique and/or statistical-based techniques and/or probabilistic-based techniques.

In the alternate aspect, as further illustrated by FIG. 6, the subject logic engine component 110 (*e.g*., in connection with evaluating agents) can optionally employ various AI based schemes for automatically carrying out various aspects thereof. Specifically, an AI engine and evaluation component 602, 604 can optionally be provided to implement aspects of the subject invention based upon AI processes (*e.g*., confidence, inference). For example, a process for determining a state of an agent and/or reconfiguration of a network can be facilitated *via* an automatic classifier system and process. Further, the optional AI engine and evaluation components 602, 604 can be employed to facilitate an automated process of reasoning in accordance with changing varying conditions. By way of example, the AI components 602, 604 can be employed to dynamically evaluate and vary system architecture(s) based upon agent status (*e.g*., state).

In another aspect, the AI components 602, 604 can facilitate the agents 202 to automatically determine to emit diagnostic information to another location (*e.g*., disparate agent, interface, logic engine, controller). Accordingly, the system can create a system classifier that can facilitate an inference of problems and/or healthy configurations for a system under stress. As well, these classifiers can assist to increase optimization of the use of resources.

A classifier is a function that maps an input attribute vector, x = (x1, x2, x3, x4, .... *xn),* to a certainty, probability, belief, or confidence that the input belongs to a particular class i, that is, f(x) *= confidence(class*_{*i*}*).* A family of classifications may be established and utilized such that the vector x belongs to multiple classes each with different probabilities. Such classification can employ a probabilistic and/or statistical-based analysis (*e.g*., factoring into the analysis utilities and costs) to prognose or infer an action that a user desires to be automatically performed.

A support vector machine (SVM) is an example of a classifier that can be employed. The SVM operates by finding a hypersurface in the space of possible inputs, which hypersurface attempts to split the triggering criteria from the non-triggering events. Intuitively, this makes the classification correct for testing data that is near, but not identical to training data. Other directed and undirected model classification approaches include, *e.g*., naive Bayes, Bayesian networks, decision trees, artificial neural networks and probabilistic classification models providing different patterns of independence can be employed. Classification as used herein also is inclusive of statistical regression that is utilized to develop models of priority.

As will be readily appreciated from the subject specification, the invention can employ classifiers that are explicitly trained (*e.g., via* a generic training data) as well as implicitly trained (*e.g*., *via* observing user behavior, receiving extrinsic information). For example, SVM's can be configured *via* a learning or training phase within a classifier constructor and feature selection module. In other words, the use of expert systems, fuzzy logic, support vector machines, greedy search algorithms, rule-based systems, Bayesian models (*e.g*., Bayesian networks), neural networks, other non-linear training techniques, data fusion, utility-based analytical systems, systems employing Bayesian models, *etc.* are contemplated and are intended to fall within the scope of the hereto appended claims.

Other implementations of AI could include alternative aspects whereby based upon a learned or predicted user intention, the system can reconfigure based upon a state of an agent or group of agents. Likewise, an optional AI component could prompt a user to further evaluate an agent as well as identify repeated agent state changes and/or other operational status. Moreover, another alternate aspect can be directed to a framework for establishing a set of hypothesis regarding the current state, the desired state and/or an acceptable state transition strategy of an individual and/or group of agents. Accordingly, relevant agents can then be probed or further interrogated to increase the belief or validity of this derived information and to assist in selecting a re-configuration state and/or state transition strategy.

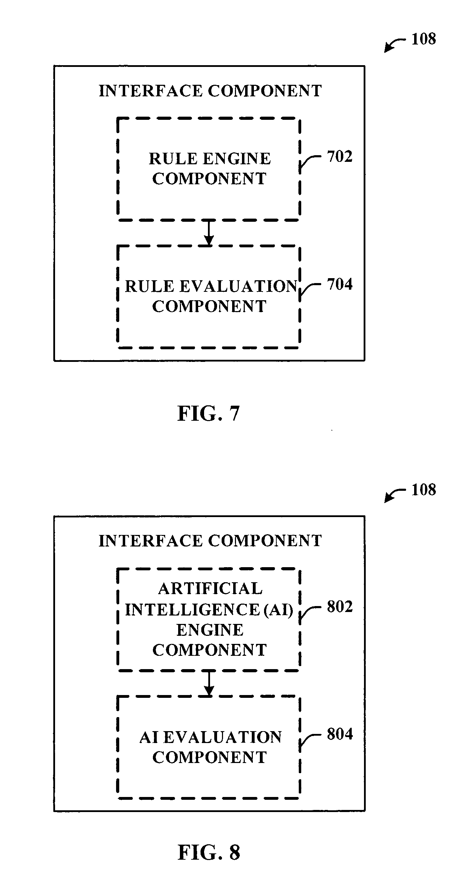

FIGS. 7 and 8 illustrate similar rule-based and AI-based components as discussed *supra* with respect to FIGS. 5 and 6. The alternative interface component 108 can employ a rule engine component 702 and a rule evaluation component 704. Similarly, FIG. 8 illustrates an alternate aspect of an interface component 108 that can employ AI-decision based mechanisms (802, 804). More particularly, FIG. 8 illustrates an AI engine and evaluation components included within an interface component 108. It is to be appreciated that the rule-based and AI-based decision making mechanisms shown in connection with automating the interface component of FIGS. 7 and 8 have the same and/or similar functionality as those described in detail *supra* with reference to FIGS. 5 and 6. By way of example, the AI components 802, 804 illustrated in FIG. 8 can facilitate instructing the measuring (*e.g*., sensing) component (not shown) to automatically adjust criteria, parameters and/or schemes in accordance with trends and/or reoccurring changes.

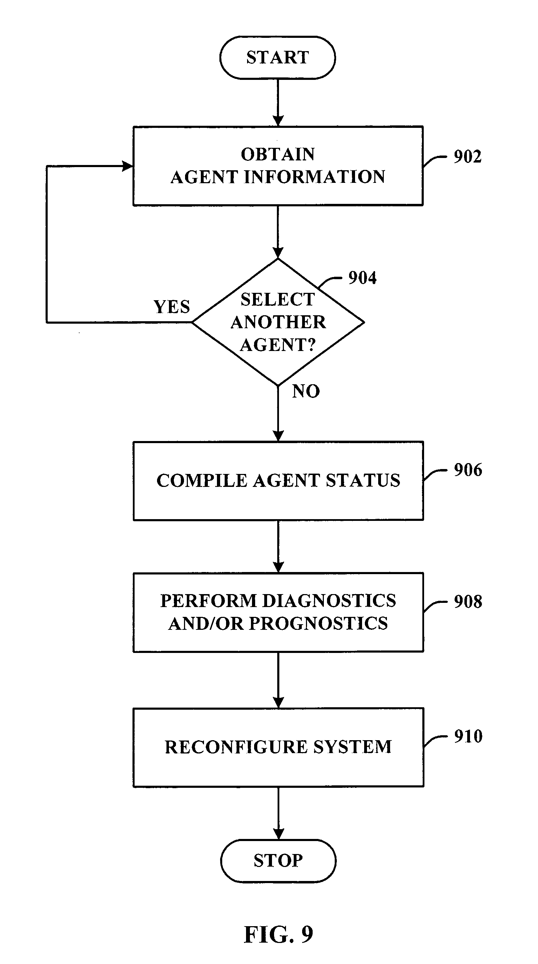

With reference now to FIG. 9, there is illustrated an exemplary flowchart in accordance to an aspect of the with the subject invention. While, for purposes of simplicity of explanation, the methodology shown herein, *e.g*., in the form of a flow chart, is shown and described as a series of acts, it is to be understood and appreciated that the subject invention is not limited by the order of acts, as some acts may, in accordance with the subject invention, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the subject invention.

Referring now to FIG. 9, at 902 information (*e.g*., status) corresponding to an agent is obtained. As discussed in detail *supra,* the status can be a state of the agent or group of agents within a distributed network. For example, the status can be a powered up or down state of an individual agent corresponding to a particular machine (*e.g*., drill). Next, at 904, the system can determine if an additional agent is present. If a determination is made that an additional agent is present, the system can return to 902 and obtain information regarding the additional agent(s). It is to be understood that this act can be recursive such that any number of agents can be polled for information. Moreover, as discussed *supra,* it is to be appreciated that automated and/or dynamic polling of agents can be employed in connection with alternate aspects. For example, the system can be configured to automatically poll and/or report agent information dynamically in accordance with a change in status.

More particularly, aspects can employ time synchronization systems and methods to obtain information from individual agents. These time synchronization aspects can poll and/or refresh model state information in accordance with a preferred timing sequence. The data captured at disparate time intervals can be employed to effect the diagnostic and/or prognostic functionality of the subject invention.

Continuing with the example of FIG. 9, once all desired agents are polled, the system can compile the agent information at 906. Once compiled, diagnostics (or prognostics) can be performed with respect to the information at 908. Again, as discussed *supra,* it will be appreciated that any diagnostic scheme and/or logic can be employed in connection with alternate aspects of the subject invention. Further, it is to be appreciated that rule based and/or artificial intelligence schemes can be employed to further automate functional aspects of the invention.

If necessary, at 910, the system can reconfigure in accordance to diagnostic results. For instance, suppose the diagnostic act identified a machine power failure. At 910, the results of the diagnostics can be employed whereby the system can be reconfigured to route alternate power to the power failure thus, eliminating an outage condition. It will be appreciated that this scenario is exemplary and is only provided to add context to the invention. The novel aspects of combining diagnostics to agent network technology can be employed in any scenario without departing from the spirit and/or scope of the invention. Note: analyzing the results or state changes resulting from the prescribed re-configuration can further validate or enhance the diagnostics/prognostic function of 908.

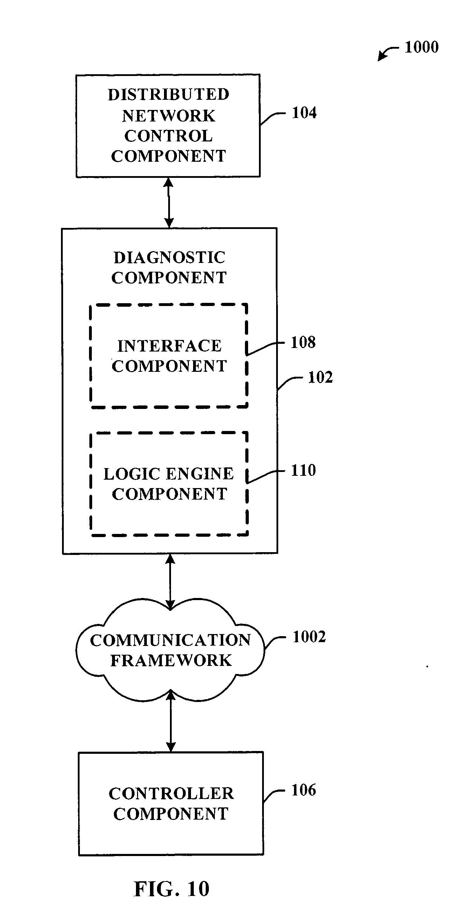

Referring to FIG. 10, a schematic block diagram of an exemplary computing environment is shown in accordance with an aspect of the subject invention.
Specifically, the system 1000 illustrated includes diagnostic component 102 having interface and logic engine components 108, 110 therein. Further, the system 1000 includes a distributed network control component 104 and a controller component 106. It is to be understood that these components can have the same functionality as discussed in detail *supra* with reference to FIG. 1. Additionally, the system 1000 illustrated employs a communication framework 1002 whereby the controller component 106 can be located remotely from the diagnostic component 102 and the distributed network control component 104. Communications framework 1002 can employ any communications technique (*e.g*., wired and/or wireless) known in the art. For example, communications framework 1002 can include, but is not limited to, Bluetooth™, Infrared (IR), Wi-Fi, Ethernet, or the like.

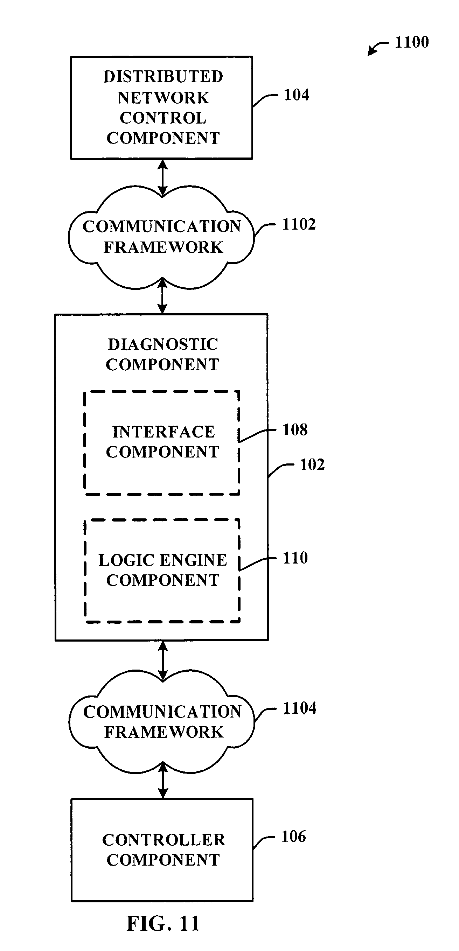

FIG. 11 illustrates another exemplary computing environment in accordance with the invention. As shown, communication framework(s) 1102, 1104 can be employed to enable locating of the diagnostic component 102 remote from either or both of the controller component 106 and/or the distributed network control component 104.

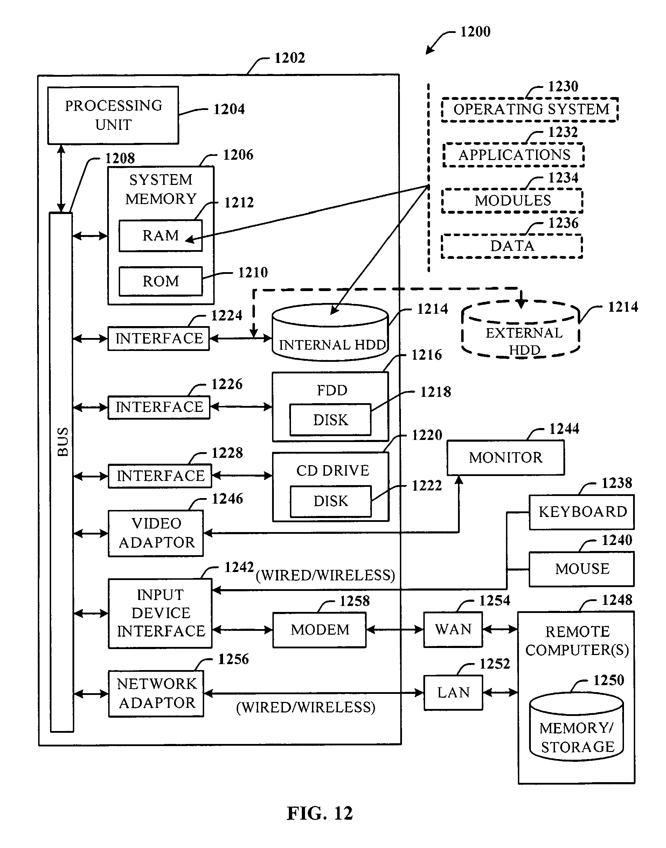

Referring now to FIG. 12, there is illustrated a block diagram of a computer operable to execute the disclosed architecture. In order to provide additional context for various aspects of the subject invention, FIG. 12 and the following discussion are intended to provide a brief, general description of a suitable computing environment 1200 in which the various aspects of the subject invention can be implemented. While the invention has been described above in the general context of computer-executable instructions that may run on one or more computers, those skilled in the art will recognize that the invention also can be implemented in combination with other program modules and/or as a combination of hardware and software.

Generally, program modules include routines, programs, components, data structures, *etc*., that perform particular tasks or implement particular abstract data types. Moreover, those skilled in the art will appreciate that the inventive methods can be practiced with other computer system configurations, including single-processor or multiprocessor computer systems, minicomputers, mainframe computers, as well as personal computers, hand-held computing devices, microprocessor-based or programmable consumer electronics, or the like, each of which can be operatively coupled to one or more associated devices.

The illustrated aspects of the invention may also be practiced in distributed computing environments where certain tasks are performed by remote processing devices that are linked through a communications network. In a distributed computing environment, program modules can be located in both local and remote memory storage devices.

A computer typically includes a variety of computer-readable media.
Computer-readable media can be any available media that can be accessed by the computer and includes both volatile and nonvolatile media, removable and non-removable media. By way of example, and not limitation, computer readable media can comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital video disk (DVD) or other optical disk storage, magnetic cassettes, magnetic tape, magnetic disk storage or other magnetic storage devices, or any other medium which can be used to store the desired information and which can be accessed by the computer.

Communication media typically embodies computer-readable instructions, data structures, program modules or other data in a modulated data signal such as a carrier wave or other transport mechanism, and includes any information delivery media. The term "modulated data signal" means a signal that has one or more of its characteristics set or changed in such a manner as to encode information in the signal.
By way of example, and not limitation, communication media includes wired media such as a wired network or direct-wired connection, and wireless media such as acoustic, RF, infrared and other wireless media. Combinations of the any of the above should also be included within the scope of computer-readable media.

With reference again to FIG. 12, there is illustrated an exemplary environment 1200 for implementing various aspects of the invention that includes a computer 1202, the computer 1202 including a processing unit 1204, a system memory 1206 and a system bus 1208. The system bus 1208 couples system components including, but not limited to, the system memory 1206 to the processing unit 1204. The processing unit 1204 can be any of various commercially available processors. Dual microprocessors and other multi-processor architectures may also be employed as the processing unit 1204.

The system bus 1208 can be any of several types of bus structure that may further interconnect to a memory bus (with or without a memory controller), a peripheral bus, and a local bus using any of a variety of commercially available bus architectures. The system memory 1206 includes read only memory (ROM) 1210 and random access memory (RAM) 1212. A basic input/output system (BIOS) is stored in a non-volatile memory 1210 such as ROM, EPROM, EEPROM, which BIOS contains the basic routines that help to transfer information between elements within the computer 1202, such as during start-up. The RAM 1212 can also include a high-speed RAM such as static RAM for caching data.

The computer 1202 further includes an internal hard disk drive (HDD) 1214 *(e.g.,* EIDE, SATA), which internal hard disk drive 1214 may also be configured for external use in a suitable chassis (not shown), a magnetic floppy disk drive (FDD) 1216, *(e.g.,* to read from or write to a removable diskette 1218) and an optical disk drive 1220, *(e.g.,* reading a CD-ROM disk 1222 or, to read from or write to other high capacity optical media such as the DVD). The hard disk drive 1214, magnetic disk drive 1216 and optical disk drive 1220 can be connected to the system bus 1208 by a hard disk drive interface 1224, a magnetic disk drive interface 1226 and an optical drive interface 1228, respectively. The interface 1224 for external drive implementations includes at least one or both of Universal Serial Bus (USB) and IEEE 1294 interface technologies.

The drives and their associated computer-readable media provide nonvolatile storage of data, data structures, computer-executable instructions, and so forth. For the computer 1202, the drives and media accommodate the storage of any data in a suitable digital format. Although the description of computer-readable media above refers to a HDD, a removable magnetic diskette, and a removable optical media such as a CD or DVD, it should be appreciated by those skilled in the art that other types of media which are readable by a computer, such as zip drives, magnetic cassettes, flash memory cards, cartridges, and the like, may also be used in the exemplary operating environment, and further, that any such media may contain computer-executable instructions for performing the methods of the subject invention.

A number of program modules can be stored in the drives and RAM 1212, including an operating system 1230, one or more application programs 1232, other program modules 1234 and program data 1236. All or portions of the operating system, applications, modules, and/or data can also be cached in the RAM 1212. It is appreciated that the subject invention can be implemented with various commercially available operating systems or combinations of operating systems.

A user can enter commands and information into the computer 1202 through one or more wired/wireless input devices, *e.g.,* a keyboard 1238 and a pointing device, such as a mouse 1240. Other input devices (not shown) may include a microphone, an IR remote control, a joystick, a game pad, a stylus pen, touch screen, or the like. These and other input devices are often connected to the processing unit 1204 through an input device interface 1242 that is coupled to the system bus 1208, but can be connected by other interfaces, such as a parallel port, a serial port, a game port, a USB port, an IR interface, *etc.*

A monitor 1244 or other type of display device is also connected to the system bus 1208 *via* an interface, such as a video adapter 1246. In addition to the monitor 1244, a computer typically includes other peripheral output devices (not shown), such as speakers, printers *etc*.

The computer 1202 may operate in a networked environment using logical connections *via* wired and/or wireless communications to one or more remote computers, such as a remote computer(s) 1248. The remote computer(s) 1248 can be a workstation, a server computer, a router, a personal computer, portable computer, microprocessor-based entertainment appliance, a peer device or other common network node, and typically includes many or all of the elements described relative to the computer 1202, although, for purposes of brevity, only a memory storage device 1250 is illustrated. The logical connections depicted include wired/wireless connectivity to a local area network (LAN) 1252 and/or larger networks, *e.g.,* a wide area network (WAN) 1254. Such LAN and WAN networking environments are commonplace in offices, and companies, and facilitate enterprise-wide computer networks, such as intranets, all of which may connect to a global communication network, *e.g.,* the Internet.

When used in a LAN networking environment, the computer 1202 is connected to the local network 1252 through a wired and/or wireless communication network interface or adapter 1256. The adaptor 1256 may facilitate wired or wireless communication to the LAN 1252, which may also include a wireless access point disposed thereon for communicating with the wireless adaptor 1256. When used in a WAN networking environment, the computer 1202 can include a modem 1258, or is connected to a communications server on the WAN 1254, or has other means for establishing communications over the WAN 1254, such as by way of the Internet. The modem 1258, which can be internal or external and a wired or wireless device, is connected to the system bus 1208 *via* the serial port interface 1242. In a networked environment, program modules depicted relative to the computer 1202, or portions thereof, can be stored in the remote memory/storage device 1250. It will be appreciated that the network connections shown are exemplary and other means of establishing a communications link between the computers can be used.

The computer 1202 is operable to communicate with any wireless devices or entities operatively disposed in wireless communication, *e.g.,* a printer, scanner, desktop and/or portable computer, portable data assistant, communications satellite, any piece of equipment or location associated with a wirelessly detectable tag *(e.g.,* a kiosk, news stand, restroom), and telephone. This includes at least Wi-Fi, IEEE 802.15.4, and Bluetooth™ wireless technologies. Thus, the communication can be a predefined structure as with conventional network or simply an ad hoc communication between at least two devices.

Wi-Fi, or Wireless Fidelity, allows connection to the Internet from a couch at home, a bed in a hotel room or a conference room at work, without wires. Wi-Fi is a wireless technology like a cell phone that enables such devices, e.g., computers, to send and receive data indoors and out; anywhere within the range of a base station. Wi-Fi networks use radio technologies called IEEE 802.11 (a, b, g, *etc.)* to provide secure, reliable, fast wireless connectivity. A Wi-Fi network can be used to connect computers to each other, to the Internet, and to wired networks (which use IEEE 802.3 or Ethernet). Wi-Fi networks operate in the unlicensed 2.4 and 5 GHz radio bands, at an 11 Mbps (802.11a) or 54 Mbps (802.11b) data rate, for example, or with products that contain both bands (dual band), so the networks can provide real-world performance similar to the basic 10BaseT wired Ethernet networks used in many offices.

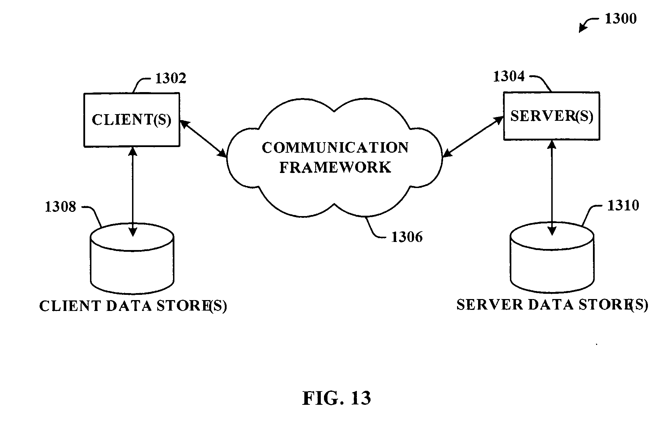

Referring now to FIG. 13, there is illustrated a schematic block diagram of another exemplary computing environment 1300 in accordance with the subject invention. The system 1300 includes one or more client(s) 1302 *(e.g.,* agents). The client(s) 1302 can be hardware and/or software *(e.g.,* threads, processes, computing devices). The client(s) 1302 can house cookie(s) and/or associated contextual information by employing the subject invention, for example. The system 1300 also includes one or more server(s) 1304 *(e.g.,* controllers). The server(s) 1304 can also be hardware and/or software *(e.g.,* threads, processes, computing devices). The servers 1304 can house threads to perform transformations by employing the subject invention, for example. One possible communication between a client 1302 and a server 1304 can be in the form of a data packet adapted to be transmitted between two or more computer processes. The data packet may include a cookie and/or associated contextual information, for example. The system 1300 includes a communication framework 1306 *(e.g.,* a global communication network such as the Internet) that can be employed to facilitate communications between the client(s) 1302 and the server(s) 1304.

Communications can be facilitated *via* a wired (including optical fiber) and/or wireless technology. The client(s) 1302 are operatively connected to one or more client data store(s) 1308 that can be employed to store information local to the client(s) 1302 (e.g., cookie(s) and/or associated contextual information). Similarly, the server(s) 1304 are operatively connected to one or more server data store(s) 1310 that can be employed to store information local to the servers 1304.

What has been described above includes examples of the subject invention. It is, of course, not possible to describe every conceivable combination of components or methodologies for purposes of describing the subject invention, but one of ordinary skill in the art may recognize that many further combinations and permutations of the subject invention are possible. Accordingly, the subject invention is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.
In summary the invention provides a system and methodology that employs an agent technology logic layer operating in connection with or integral to a controller. The logic layer can be a functional extension of the controller's firmware that facilitates logical reasoning and decision-making with regard a network as a function of individual agent(s) state and/or status. The components of the subject invention can facilitate combining high level reasoning and/or decision making capabilities with conventional control programs to effect agent-based system diagnosis and/or system reconfiguration.

## Claims

1. A system that facilitates analyzing an agent-based network, the system comprising:
an interface component that receives information from an agent; and
a logic engine component that utilizes the information together with information from a disparate agent to analyze the agent-based network.

2. The system of claim 1 further comprising a controller component that reconfigures the agent-based network in accordance with an output from the logic engine component.

3. The system of claim 2, the controller component includes a firmware component having logic that effects reconfiguration of the agent-based network in accordance with the output from the logic engine component.

4. The system of claim 1, 2 or 3, further comprising a sensing component that facilitates obtaining the information from the agent.

5. The system of claim 4 the sensing component is integral to the interface component.

6. The system of one of claims 1 to 5, further comprising an analyzing component that generates the information in accordance with a determined state of the agent.

7. The system of one of claims 1 to 6, the logic engine component is integral to the agent.

8. The system of one of claims 1 to 7, the logic engine component comprises:
a rule engine component that automatically instantiates a rule that implements a predefined criteria; and
a rule evaluation component that applies the rule with respect to the information.

9. The system of one of claims 1 to 7, the logic engine component comprises an artificial intelligence (AI) component that predicts a user intention as a function of historical criteria.

10. The system of claim 9, the AI component comprises an inference component that facilitates evaluation of the agent as a function of the predicted user intention.

11. The system of claim 10, the inference component employs a utility-based analyses in performing the evaluation.

12. The system of claim 11, the inference component employs a statistical-based analysis to predict an intent of a user with respect to an action to be automatically performed.

13. The system of one of claims 9 to 12, the AI component predicts one of a system state, predicted user intention, predicted mission or change in loading, and future allowable failure-risk level.

14. The system of one of claims 1 to 13, the interface component comprises:
a rule engine component that automatically instantiates a rule that implements a predefined criteria; and
a rule evaluation component that applies the rule to obtain the information from the agent.

15. The system of one of claims 1 to 14, the interface component comprises an artificial intelligence (AI) component that predicts a user intention as a function of the information.

16. The system of claim 15, the AI component comprises an inference component that facilitates evaluation of the agent as a function of the predicted user intention.

17. The system of claim 16, the inference component employs a utility-based analyses in performing the evaluation.

18. The system of claim 16, the inference component employs a statistical-based analysis to automatically perform an action in accordance with a predicted user intent.

19. A computer readable medium having stored thereon the components of one of claims 1 to 18.

20. A method for evaluating an agent-based network, the method comprising:
obtaining information from a plurality of agents;
employing logic that evaluates the agent-based network in accordance with the information; and
reconfiguring the agent-based network as a function of an output of the logic.

21. The method of claim 20, further comprising recording the information obtained from the plurality of agents.

22. The method of claim 20 or 21, further comprising communicating from one agent to a disparate agent.

23. The method of claim 20, 21 or 22 further comprising compiling the information from the plurality of agents corresponding to a plurality of networks.

24. The method of one of claims 20 to 23, further comprising:
automatically instantiating a rule that implements a predefined criteria; and
applying the rule with respect to the information.

25. The method of one of claims 20 to 24, further comprising predicting a user intention as a function of historical user criteria.

26. The method of one of claims 20 to 25, further comprising:
automatically instantiating a rule that implements a predefined criteria; and
obtaining the information from the plurality of agents in accordance with the rule.

27. A computer readable medium having stored thereon computer executable instructions for carrying out the method of one of claims 20 to 26.

28. A system that facilitates diagnosing an agent-based network, the system comprising:
a sensing component that obtains state information from a plurality of agents;
an interface component that receives the state information from the sensing component;
a logic engine component that diagnoses the plurality of agents in accordance with the state information; and
a controller component including firmware that configures the agent-based network in accordance with an output from the logic engine component.

29. The system of claim 28, the logic engine component comprises an artificial intelligence (AI) component that predicts a user intention as a function of historical user criteria.

30. The system of claim 28 or 29, further comprising an artificial intelligence (AI) component that predicts a user intention as a function of historical user criteria.

31. The system of claim 28, 29 or 30 the logic engine component is remote from the plurality of agents.

32. The system of one of claims 28 to 31, the logic engine component is remote from the controller component.

33. The system of one of claims 28 to 32, the controller is one of an industrial, commercial, vehicle, and embedded device.

34. A computer readable medium having stored thereon the components of one of claims 28 to 33.

35. A system that facilitates diagnosing a network, the system comprising:
a plurality of agents that generate state information;
a plurality of logic engine components that diagnose the network in accordance with the state information of the plurality of agents, one of the plurality of logic engine components interface to each of the plurality of agent components; and
a controller component including firmware that reconfigures the agent-based network in accordance with an output from the plurality of logic engine components.

36. The system of claim 35, the plurality of logic engine components comprise an artificial intelligence (AI) component that predicts a user intention as a function of the state information.

37. A computer readable medium having stored thereon the components of claim 35 or 36.

38. The system of claim 35 or 36, the plurality of logic engine components facilitate analysis and reconfiguration of the network in accordance with the state information of at least one of the plurality of agents.

39. The system of claim 35, 36 or 38 the controller is one of an industrial, commercial, vehicle and embedded device.
